# EUROPEAN PATENT APPLICATION

(11) **EP 1 635 573 A2**
(43) Date of publication of application: **15.03.2006**
(21) Application number: 05019907.4
(22) Date of filing: 13.09.2005
(51) Int. Cl.: H04N 7/18

(54) **Imaging system and imaging method**

(30) Priority: 13.09.2004 JP 2004266013
(71) Applicant: SONY CORPORATION, Tokyo (JP)
(72) Inventor: Miyamaki, Hideo, Shinagawa-ku Tokyo (JP); Suzuki, Masaharu, Shinagawa-ku Tokyo (JP); Tamura, Asako, Shinagawa-ku Tokyo (JP); Hibi, Hiroshi, Shinagawa-ku Tokyo (JP); Tabuchi, , Satoshi, Shinagawa-ku Tokyo (JP)
(74) Representative: Körber, Martin Hans

(57) **Abstract**

To effectively and reliably acquire detailed images of plural moving subjects in the case where a fixed camera or a pan/tilt camera for searching the moving subject and another pan/tilt camera for taking an image of the details of the moving subject by zooming the moving subjects are used to detect the moving subjects. An imaging system (100) including a sensor camera (10), a zoom camera (20), and a controller (30) that controls the sensor camera and zoom camera, and includes a moving subject detection unit extracting the position and the size of a moving subject from a sensor image, an imaging angle of view calculation unit determining one imaging angle of view based on plural moving subjects extracted by the moving subject detection unit, a unit allowing the zoom camera to perform imaging of the area specified depending on the position of the angle, moving speed, and size determined by the imaging angle of view calculation unit, a unit managing the order of the imaging operation of the zoom camera, a unit holding the imaging angle of view for a given time at the time when all the moving subjects in the imaging angle of view become static, and a unit calculating the imaging position in the imaging area of the sensor camera, and assigns ID to an imaging angle of view, assigns the same angle of view ID to the imaging angle even after the moving subject becomes static, controls the priority of the imaging operation of the imaging angle of view including the same moving subject, and allows the zoom camera to take an image of a tracking target in the imaging area of the sensor camera while performing wide-angle imaging with the sensor camera.

## Description

### CROSS REFERENCE TO RELATED APPLICATIONS

The present invention contains subject matter related to Japanese Patent Application JP 2004-266013 filed in Japanese Patent Office on September, 13, 2004, the entire contents of which being incorporated herein by reference.

### BACKGROUND OF THE INVENTION

### 1. Field of the Invention

The present invention relates to an imaging system and an imaging method that use a sensor camera to perform wide-angle imaging while using a zoom camera to take an image of a subject to be tracked in the imaging area of the sensor camera.

### 2. Description of the Related Art

An electronic still camera, which has been widely used, is configured to: take an image of a subject to convert a light transmitted through a lens into an image signal by a solid-state image sensing device such as a CCD; record the image signal onto a recording medium; and reproduce the recorded image signal. Many of the electronic still cameras include a monitor capable of displaying the imaged still image, on which recorded still images can selectively be displayed. In this electronic still camera, the image signal to be supplied to the monitor corresponds to a subject for each screen, so that image area to be displayed at a time is limited, making it impossible to monitor the condition of a wide area at once.

Under the circumstances, a monitoring camera capable of monitoring the condition of a wide area is now in widespread use, in which a subject is imaged with the imaging direction of a camera sequentially shifted to obtain a panoramic entire image constituted by a plurality of unit-images. Particularly, in recent years, a technique of contracting/synthesizing a plurality of video signals into a video signal corresponding to one frame has been proposed (refer to, for example, Patent Document 1: Jpn. Pat. Appln. Laid-Open Publication No. H10-108163). Further, a centralized monitoring recording system which realizes a monitoring function by acquiring monitoring video images from a plurality of set up monitoring video cameras and recording them onto a recording medium such as a video tape has been proposed (refer to, for example, Patent Document 2: Jpn. Pat. Appln. Laid-Open Publication No. 2000-243062).

### SUMMARY OF THE INVENTION

However, in the monitoring camera as described above, in order to obtain an image of a plurality of moving subjects, imaging operations must be performed for each moving subject, which makes it impossible to capture, without fail, all the moving subjects.

In an imaging operation in which the position of the moving subject is acquired from a sensor camera, and pan, tilt, or zoom control is performed depending on the moving speed of the moving subject, the moving picture is likely to be out of the camera angle, which makes it impossible to acquire a detailed image of the moving subject.

The present invention has been made in view of the above problems, and it is desirable to effectively and reliably acquire a detailed image of a plurality of moving subjects in the case where a fixed camera or a pan/tilt camera for searching the moving subjects and another pan/tilt camera for taking a detailed image of the moving subjects by zooming the moving subjects are used to detect the moving subjects.

The above and other objects, advantages and features of the present invention will be more apparent from the following description.

According to the present invention, there is provided an imaging system including: a sensor camera that performs wide-angle imaging; a zoom camera that takes an image of a subject to be tracked in an imaging area of the sensor camera; and a controller that controls the sensor camera and zoom camera, wherein the controller includes: a moving subject detection means for extracting the position and the size of a moving subject from a sensor image obtained by the sensor camera; an imaging angle of view calculation means for determining one imaging angle of view based on a plurality of moving subjects extracted by the moving subject detection means; a tracking target image acquisition means for allowing the zoom camera to perform imaging of the area specified depending on the position of the angle, moving speed, and size which are determined by the imaging angle of view calculation means; an angle of view tracking order management means for managing the order of the imaging operation of the zoom camera; a static imaging angle of view management means for holding the imaging angle of view for a given time at the time when all the moving subjects in the imaging angle of view become static; and a camera relative position correction means for calculating the imaging position in the imaging area of the sensor camera, and assigns ID to an imaging angle of view; assigns the same angle of view ID to the imaging angle even after the moving subject becomes static; controls the priority of the imaging operation of the imaging angle of view including the same moving subject; and allows the zoom camera to take an image of a tracking target in the imaging area of the sensor camera while performing wide-angle imaging with the sensor camera.

In the above imaging system, the controller may lower the priority of the imaging operation having a longer duration of action performed at the imaging angle of view including the same moving subject.

In the above imaging system, the controller may raise the priority of the imaging operation performed at the same imaging angle of view.

In the above imaging system, the controller may hold change information of the angle of view position and determine zoom magnification and imaging position based on the change information.

According to the present invention, there is provided an imaging method, in taking an image of a subject to be tracked in the imaging area of a sensor camera with a zoom camera while performing wide-angle imaging with the sensor camera, including the steps of: extracting the position and the size of a moving subject from a sensor image obtained by the sensor camera that performs wide-angle imaging; determining one imaging angle of view based on a plurality of the extracted moving subjects; allowing the zoom camera to perform imaging of a plurality of the extracted moving subjects in the imaging area of the sensor camera as tracking targets based on the determined position of the angle, moving speed, and size and managing the order of the imaging operation; holding the imaging angle of view for a given time at the time when all the moving subjects in the imaging angle of view become static; assigning ID to an imaging angle of view, assigning the same angle of view ID to the imaging angle even after all the moving subject become static, and controlling the priority of the imaging operation of the imaging angle of view including the same moving subject; and allowing the zoom camera to take an image of a tracking target in the imaging area of the sensor camera while performing wide-angle imaging with the sensor camera.

According to the present invention, in taking an image of a subject to be tracked in the imaging area of a sensor camera with a zoom camera while performing wide-angle imaging with the sensor camera, ID is assigned to the imaging angle of view and the same imaging angle of view ID is assigned even after the moving subject becomes static to control the priority of the imaging operation. For example, it is possible to image more moving subjects by lowering the priority of the imaging operation having a longer duration of action performed at the imaging angle of view including the same moving subject, or, it is possible to continue to take an image of the same imaging angle of view by raising the priority of the same imaging angle of view. Further, the change information of the angle of view position is hold and, based on the change information, zoom magnification and imaging position is determined, so that it is possible to acquire the detailed image even in the case where a plurality of moving subjects having a certain larger size move at a higher speed. The detailed image is obtained in two stages such that a first image is obtained after pan/tilt control and a second one is obtained after control, so that it is possible to raise the possibility that the image of the tracking target is taken in the detailed image of the moving subject. The detailed image can also be used as a search key for retrieving the moving subject at the reproduction time of the taken image.

### BRIEF DESCRIPTION OF THE DRAWINGS

FIG. 1 is a block diagram showing a configuration of an imaging system according to the present invention;
FIG. 2 is a block diagram showing another configuration of an imaging system according to the present invention;
FIG .3 is a block diagram schematically showing a functional configuration of a client in the imaging system according to the present invention;
FIG. 4 is a software module correlation diagram showing a relation between the modules implemented in the client;
FIG. 5 is a flowchart showing an operation of a sensor image acquisition module implemented in the client;
FIG. 6 is a flowchart showing an operation of a moving subject detection module implemented in the client;
FIG. 7 is a flowchart showing an operation of an imaging angle of view calculation module implemented in the client;
FIG. 8 is a flowchart showing an operation of a tracking target image acquisition module implemented in the client;
FIG. 9 is a flowchart showing an operation of a camera relative position correction module implemented in the client;
FIG. 10 is a flowchart showing an operation of a result display module implemented in the client;
FIG. 11 is a view showing imaging angles of view and ID assignation in the imaging system according to the present invention; and
FIG. 12 is a view showing a sensor image covering a wide area, which is obtained using a sensor camera and a detailed image obtained using a zoom camera, in which a plurality of moving subjects in the imaging area of the sensor camera are integrated as a subject to be tracked, in the imaging system according to the present invention.

### DETAILED DESCRIPTION OF THE PREFERRED EMBODIMENTS

An embodiment of the present invention will be described below in detail with reference to the accompanying drawings. It goes without saying that the present invention is not limited to the following embodiment, and various changes may be made without departing from the scope of the invention.

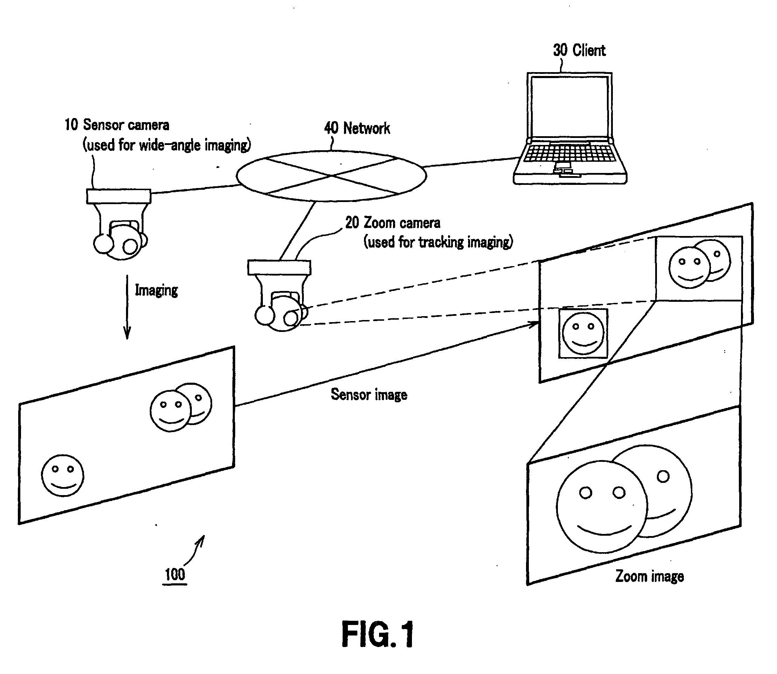

The present invention is applied to, for example, an imaging system 100 having a configuration as shown in FIG. 1.

The imaging system 100 is a system capable of performing wide-angle imaging with one camera. The imaging system 100 is constituted by a client 30 that remote-controls a sensor camera 10 and a zoom camera 20, and a network 40 that connects them. The client 30 has a function of remote-controlling camera direction (pan/tilt), zoom magnification, and imaging operation through the network 40.

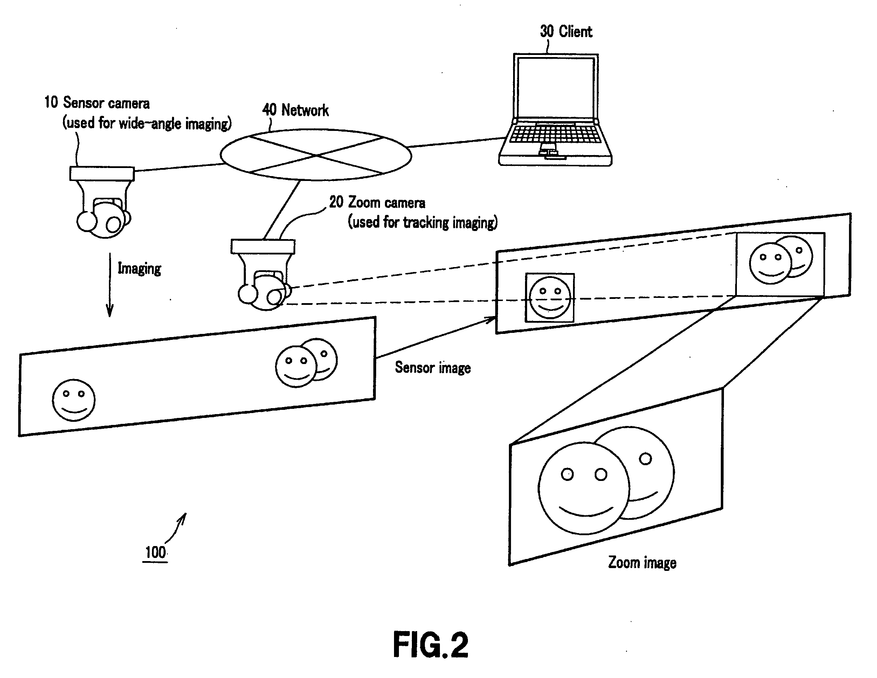

The present invention is also applicable to the case of FIG. 2, where a fixed camera 10A that performs wide angle imaging of 360° is used as the sensor camera 10.

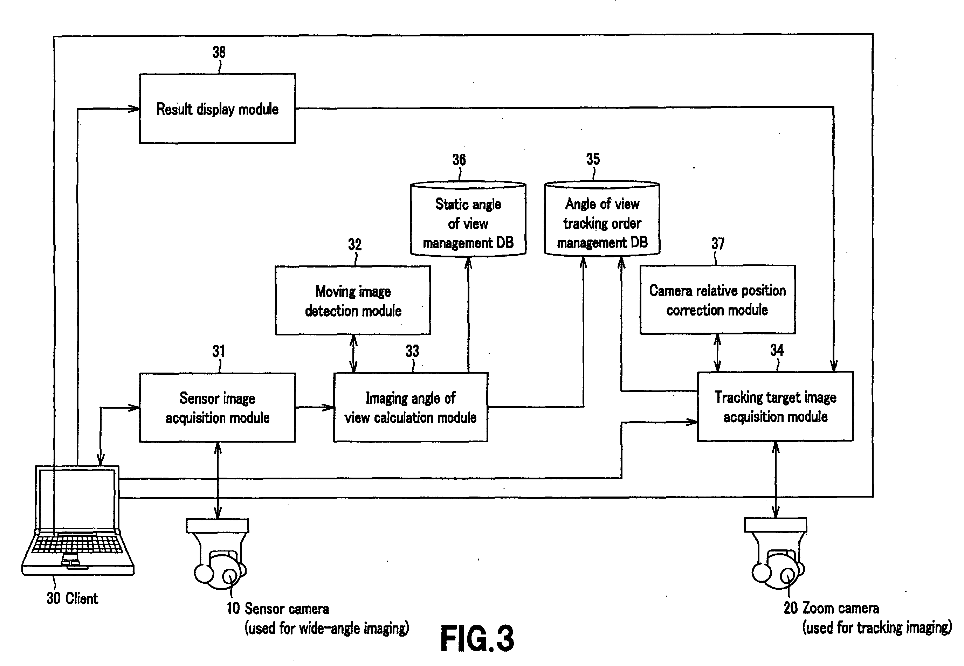

As shown in FIG. 3, the client 30 includes: a sensor image acquisition module 31 that performs wide-angle imaging and uses the sensor camera 10 as a sensor for the target moving subject; a moving subject detection module 32 that extracts the position and size of the moving subject from the sensor image; an imaging angle of view calculation module 33 that determines one imaging angle of view based on a plurality of moving subjects; a tracking target image acquisition module 34 that issues an imaging command for allowing the zoom camera 20 to perform imaging of the area specified depending on the position of the angle, moving speed, size which are determined based on the moving objects; an imaging angle of view tracking order management database 35 that manages the order of the imaging operation of the zoom camera 20; a static imaging angle of view management database 36 that holds an imaging angle of view for a given time at the time when all the moving subjects in the imaging angle of view become static; a camera relative position correction module 37 that calculates the imaging position of the zoom camera 20 in the imaging area of the sensor camera 10; and a result display module 38 that allows the client 30 to display an imaging result.

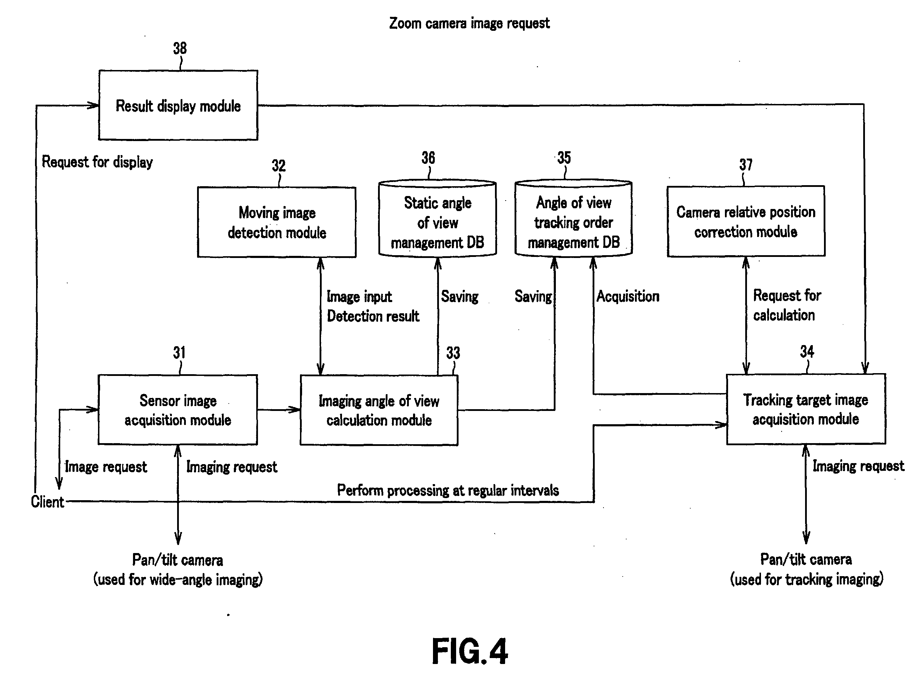

FIG. 4 shows a relation between the modules implemented in the client 30.

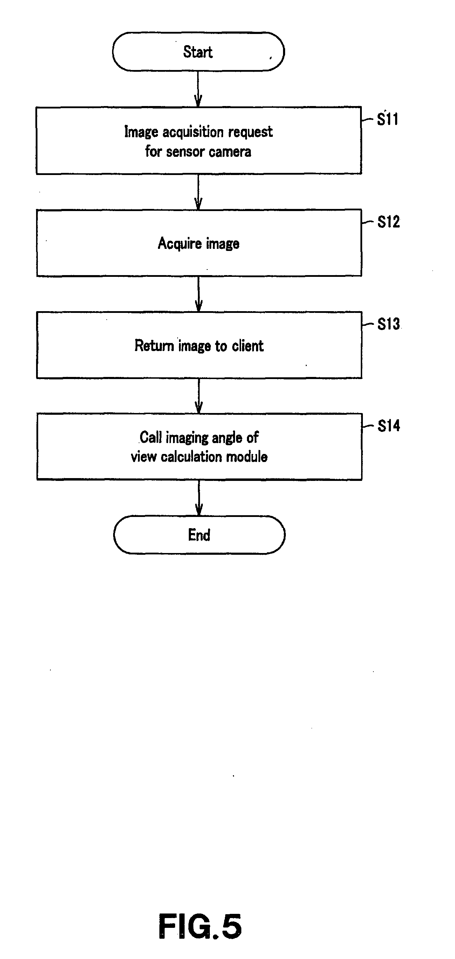

The sensor image acquisition module 31 is a module that acquires an image obtained by wide-angle imaging for detection of a moving subject and performs processing according to the flowchart of FIG. 5.

More specifically, the sensor image acquisition module 31 firstly makes an image acquisition request for the sensor camera 10 (step S11) at the processing start time and acquires a sensor image from the sensor camera 10 (step S 12). The sensor image acquisition module 31 then returns the image to the client 30 (step S 13), calls the imaging angle of view calculation module 33 (step S14), and ends the processing.

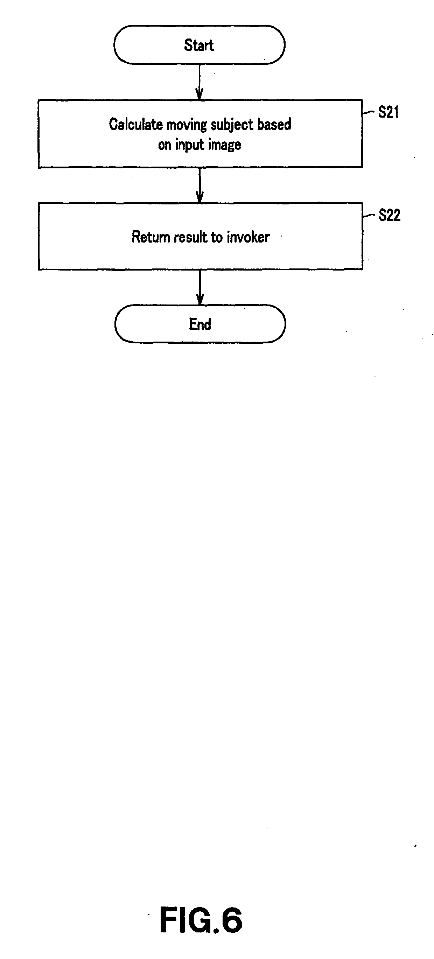

The moving subject detection module 32 is a module that extracts the position and size of the moving object from the sensor image and performs processing according to the flowchart of FIG. 6.

More specifically, the moving subject detection module 32 calculates the position and size of the moving subject based on the previously input sensor image at the processing start time (step S21), returns the calculation result to the sensor image acquisition module 31 (invoker) (step S22) and ends the processing.

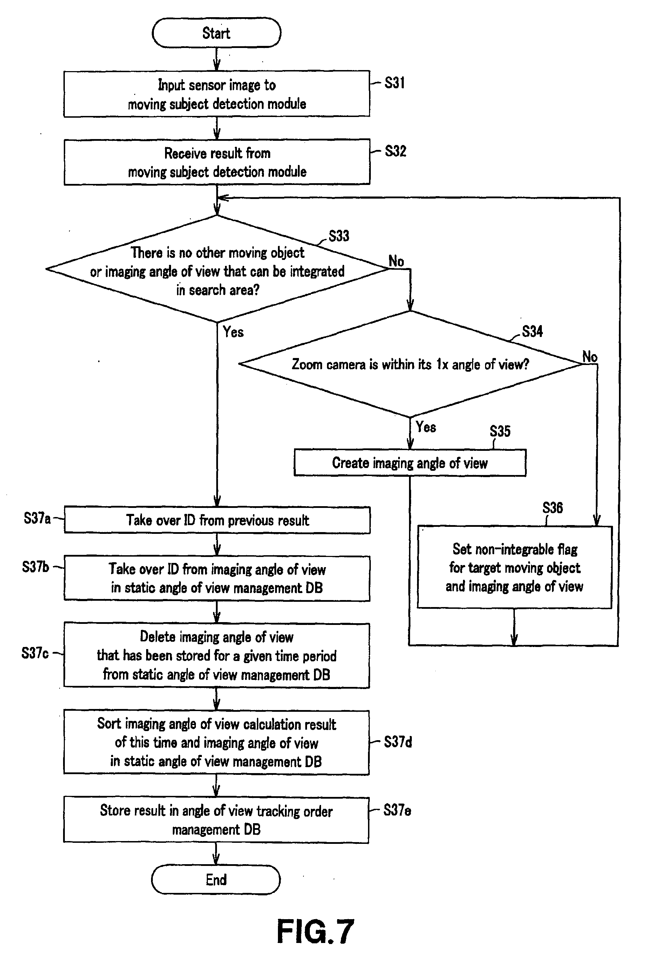

The imaging angle of view calculation module 33 is a module that determines imaging angles of view and the order of imaging operations performed at the imaging angles of view based on the positions and sizes of all the moving subjects acquired by the moving subject detection module 32 and performs processing according to the flowchart of FIG. 7.

More specifically, the imaging angle of view calculation module 33 firstly inputs a sensor image to the moving subject detection module 32 at the processing start time (step S31) and receives a result from the moving subject detection module 32 (step S32).

The imaging angle of view calculation module 33 then determines whether there is no other moving subject or imaging angle of view that can be integrated in the detection area (step S33). When the determination result is NO, the imaging angle of view calculation module 33 determines whether the zoom camera 20 is within its 1x angle of view (step S34).

When the determination result in step S34 is NO, the imaging angle of view calculation module 33 sets a non-integrable flag for the target moving subject and imaging angle of view (step S36) and returns to the determination processing in step S33. When the determination result in step S34 is YES, the imaging angle of view calculation module 33 calculates the imaging angle of view (step S35) and returns to the determination processing in step S33.

When the determination result in step S33 is YES, the imaging angle of view calculation module 33 takes over the ID from the previous result (step S37a), takes over the ID from the imaging angle of view in the static imaging angle of view management database 36 (step S37b), and deletes the imaging angle of view that has been stored for a given time from the data in the static imaging angle of view management database 36 (step S37c).

The imaging angle of view calculation module 33 sorts the imaging angle of view calculation result of this time and the imaging angles of view in the static imaging angle of view management database 36 (step S37c), stores its result in the angle of view tracking order management database 35 (step S37c), and ends the processing.

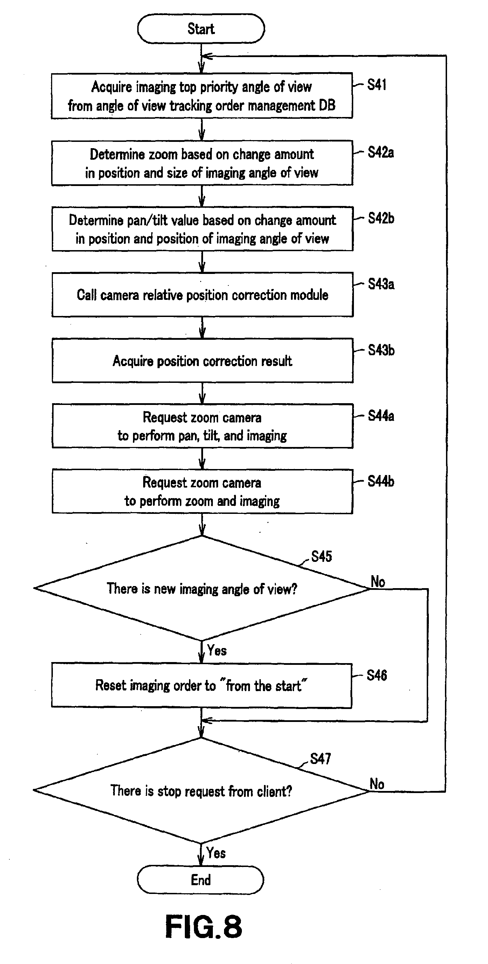

The tracking target image acquisition module 34 is a module that takes a tracking target image based on the angle of view tracking order management database 35 and the position correction result calculated by the camera relative position correction module 37 and performs processing according to the flowchart of FIG. 8.

The tracking target image acquisition module 34 firstly acquires the top priority imaging angle of view from the imaging angle of view tracking order management database 35 at the processing start time (step S41), determines a zoom value based on the acquired change amount in the position and the size of the imaging angle (step S42a) and determines a pan/tilt value based on the change amount in the position and the position of the imaging angle (step S42b). The tracking target image acquisition module 34 then calls the camera relative position correction module 37 (step S43a) and acquires the position correction result from the camera relative position correction module 37 (step S43b).

The tracking target image acquisition module 34 then sends a pan/tilt command and imaging request to the zoom camera 20, acquires a detailed image from the zoom camera 20, and sends the image to the result display module 38 (step S44a). Further, the tracking target image acquisition module 34 sends a zoom command and imaging request to the zoom camera 20, acquires a detailed image from the zoom camera 20, and sends the image to the result display module 38 (step S44b).

The tracking target image acquisition module 34 then determines whether there is a new imaging angle of view in the angle of view tracking order management database 35 (step S45). When the determination result is YES, that is, when there is a new imaging angle of view, the tracking target image acquisition module 34 resets the imaging order managed by the imaging angle of view tracking order management database 35 to "from the start" and resumes the imaging operation from the start of the sequence of the imaging angles of view. When the determination result in step S45 is NO, that is, when there is no new imaging angle of view, the tracking target image acquisition module 34 takes the next imaging angle of view according to the priority that the imaging angle of view tracking order management database 35 is holding (step S45).

The tracking target image acquisition module 34 then determines whether a stop request has been issued from the client 30 (step S47). When the determination result is NO, that is, when a stop request has not been issued, the tracking target image acquisition module 34 returns to step S41 and repeats the processing from step S41 to step S47. When the determination result in step S47 is YES, that is, when a stop request has been issued from the client 30, the tracking target image acquisition module 34 ends the processing.

The imaging angle of view tracking order management database 35 is a database that manages the imaging angle and its imaging order. The static imaging angle of view management database 36 is a database that manages the imaging angle for the moving subject in a static state. When a new imaging angle of view that takes over the lD of the imaging angle of view stored in the static imaging angle of view management database 36 is not found within a given time, the stored imaging angle of view is automatically deleted from the database 36.

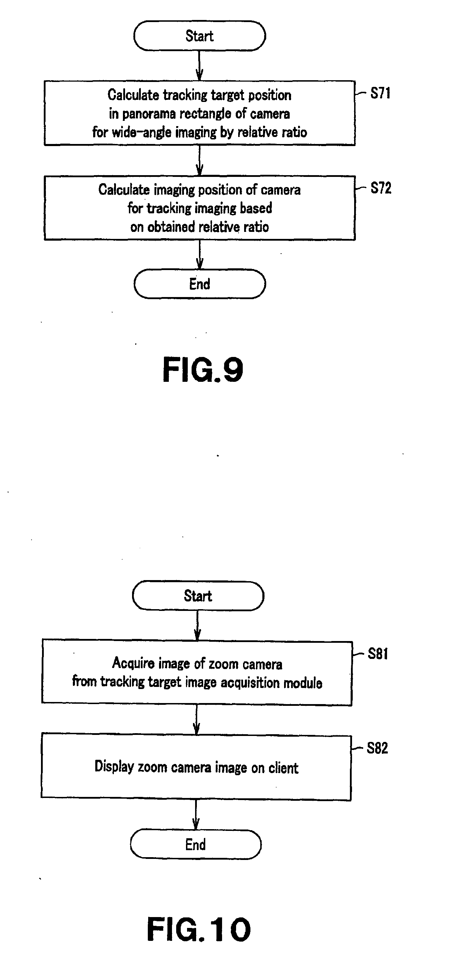

The camera relative position correction module 37 calculates the tracking target position in the imaging area (panorama rectangle) of the sensor camera 10 for wide-angle imaging by relative ratio (step S71) and calculates the imaging position in the sensor camera 10 based on the obtained relative ratio (step S72), as shown in the flowchart of FIG. 9.

The result display module 38 is a module that displays the tracking target image. As shown in the flowchart of FIG. 10, the result display module 38 acquires the image of the zoom camera 20 from the tracking target image acquisition module 34 (step S81) and allows the client 30 to display the zoom camera image (step S82).

In the imaging system 100 having the above configuration, operation of acquiring moving subject information from a sensor image and creating angle of view information is performed as follows.

That is, the sensor image acquisition module 31 acquires a sensor image from the sensor camera 10 according to the procedure of the flowchart shown in FIG. 5, returns the image to the client 30, and calls the imaging angle of view calculation module 33.

In response to the call from the sensor image acquisition module 31, the imaging angle of view calculation module 33 inputs the image to the moving subject detection module 32, receives a result from the moving subject detection module 32, and calculates a necessary imaging angle of view based on the position and size of the moving subject, according to the procedure of the flowchart shown in FIG. 7.

The tracking target image acquisition module 34 periodically executes processing according to the procedure of the flowchart shown in FIG.8.

Further, in the imaging system 100, operation of updating the imaging angle of view tracking order management database 35 is performed as follows.

The imaging angle of view calculation module 33 assigns the ID of the previous imaging angle of view to a new imaging angle of view in the case where the new imaging angle of view corresponds to the previous imaging angle of view according to the procedure of the flowchart shown in FIG. 7 and, at the same time, updates imaging angle of view change information.

When the previous imaging angle of view ID cannot have been assigned, the imaging angle of view calculation module 33 assigns the ID of the imaging angle of view corresponding to the new imaging angle of view from the static imaging angle of view management database 36. When the previous imaging angle of view ID can have been assigned from the static imaging angle of view management database 36, the relevant imaging angle of view is deleted from the static imaging angle of view management database 36.

Further, the imaging angle of view calculation module 33 assigns a new imaging angle of view ID to the new imaging angle of view to which the previous imaging angle of view ID cannot have been assigned. The previous imaging angle of view whose imaging angle of view ID cannot have been assigned is added to the static imaging angle of view management database 36.

Further, the imaging angle of view calculation module 33 deletes the imaging angle of view existing in the static imaging angle of view management database 36 for a given time that has been defined in the system from the static imaging angle of view management database 36.

The imaging angle of view calculation module 33 gives a status of "new" or "renewal" to the imaging angle of view of this time and gives a status of "stop" to the imaging angle of view in the static imaging angle of view management database 36.

The imaging angle of view calculation module 33 then sorts the imaging angles in the ascending order of duration or in the order starting from the specified imaging angle of view ID and updates the imaging angle of view tracking order management database 35.

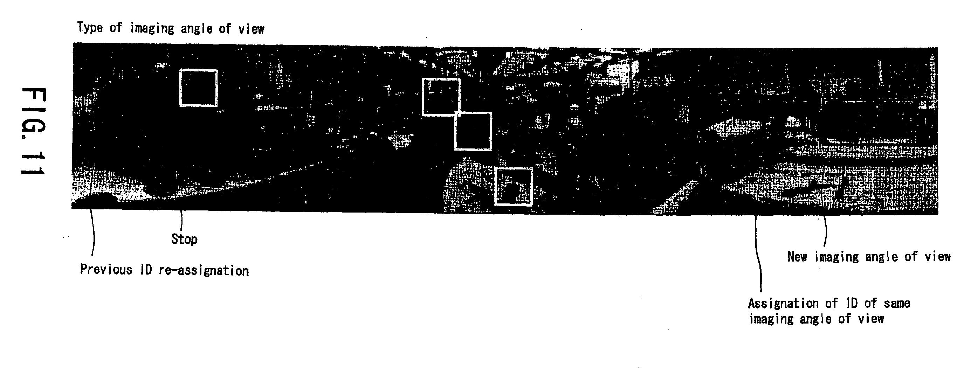

Imaging angles of view and ID assignation in the imaging system according to the present invention are shown in FIG. 11.

Further, in the imaging system 100, imaging operation using the imaging angle of view tracking order management database 35 is performed as follows.

According to the procedure of the flowchart shown in FIG. 8, the tracking target image acquisition module 34 takes out the imaging angle of view in the stored order from the imaging angle of view tracking order management database 35, determines a pan/tilt value of the zoom camera and zoom value based on the position of the imaging angles of view, position change information, size of the imaging angle of view, camera relative position correction logic, sends a pan/tilt command to the zoom camera 20, acquires one detailed image, and sends the detailed image to the result display module 38. Further, the tracking target image acquisition module 34 sends a zoom command to the zoom camera 20, acquires one detailed image, and sends the detailed image to the result display module 38.

The tracking target image acquisition module 34 then checks whether there is no new imaging angle of view in the imaging angle of view tracking order management database 35. When a new imaging angle of view exists, the module 34 resumes imaging operation from the start of the sequence of the imaging angles of view managed by the imaging angle of view tracking order management database 35. When there is no new imaging angle of view, the tracking target image acquisition module 34 takes the next imaging angle of view according to the priority that the imaging angle of view tracking order management database 35 is holding.

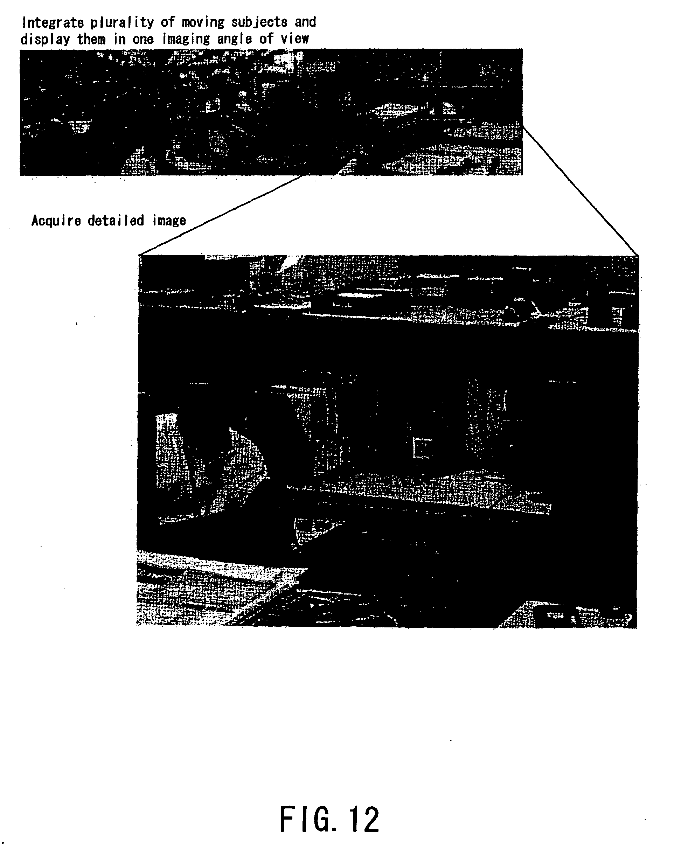

As described above, in the imaging system 100 having two cameras 10 and 20, the sensor camera 10 is used to perform wide-angle imaging while the zoom camera 20 is used to take an image of a subject to be tracked in its imaging area. At this time, as shown in FIG. 12, a plurality of moving subjects are integrated and displayed in one imaging angle of view, and detailed image thereof can be acquired. Further, ID is assigned to the imaging angle of view and the same imaging angle of view ID is assigned even after the moving subject becomes static to control the priority of the imaging operation. For example, it is possible to image more moving subjects by lowering the priority of the imaging operation having a longer duration of action performed at the imaging angle of view including the same moving subject, or, it is possible to continue to take an image of the same imaging angle of view by raising the priority of the same imaging angle of view. Further, the change information of the angle of view position is hold and, based on the change information, zoom magnification and imaging position are determined, so that it is possible to acquire the detailed image even in the case where a plurality of moving subjects having a certain larger size move at a high speed. The detailed image is obtained in two stages such that a first image is obtained after pan/tilt control and a second one is obtained after zoom control, so that it is possible to raise the possibility that the image of the tracking target is taken in the detailed image of the moving subject. The detailed image can also be used as a search key for retrieving the moving subject at the reproduction time of the taken image.

It should be understood by those skilled in the art that various modifications, combinations, sub-combinations and alternations may occur depending on design requirements and other factors insofar as they are within the scope of the appended claims or the equivalents thereof.

## Claims

1. An imaging system (100) comprising:
a sensor camera (10) that performs wide-angle imaging;
a zoom camera (20) that takes an image of a subject to be tracked in an imaging area of the sensor camera; and
a controller (30) that controls the sensor camera and zoom camera,
wherein
the controller (30) includes:
moving subject detection means for extracting the position and the size of a moving subject from a sensor image obtained by the sensor camera; imaging angle of view calculation means for determining one imaging angle of view based on a plurality of moving subjects extracted by the moving subject detection means; tracking target image acquisition means for allowing the zoom camera to perform imaging of the area specified depending on the position of the angle, moving speed, and size which are determined by the imaging angle of view calculation means; angle of view tracking order management means for managing the order of the imaging operation of the zoom camera; static imaging angle of view management means for holding the imaging angle of view for a given time at the time when all the moving subjects in the imaging angle of view become static; and camera relative position correction means for calculating the imaging position in the imaging area of the sensor camera, and assigns ID to an imaging angle of view; assigns the same angle of view ID to the imaging angle even after the moving subject becomes static; controls the priority of the imaging operation of the imaging angle of view including the same moving subject; and allows the zoom camera to take an image of a tracking target in the imaging area of the sensor camera while performing wide-angle imaging with the sensor camera.

2. The imaging system (100) according to claim 1, wherein the controller (30) lowers the priority of the imaging operation having a longer duration of action performed at the imaging angle of view including the same moving subject.

3. The imaging system according to claim 1 or 2, wherein the controller (30) raises the priority of the imaging operation performed at the same imaging angle of view.

4. The imaging system according to claim 1, 2 or 3, wherein the controller (30) holds change information of the angle of view position and determines zoom magnification and imaging position based on the change information.

5. An imaging method, in taking an image of a subject to be tracked in the imaging area of a sensor camera with a zoom camera while performing wide-angle imaging with the sensor camera, comprising the steps of:
extracting the position and the size of a moving subject from a sensor image obtained by the sensor camera that performs wide-angle imaging;
determining one imaging angle of view based on a plurality of the extracted moving subjects;
allowing the zoom camera to perform imaging of a plurality of the extracted moving subjects in the imaging area of the sensor camera as tracking targets based on the determined position of the angle, moving speed, and size and managing the order of the imaging operation;
holding the imaging angle of view for a given time at the time when all the moving subjects in the imaging angle of view become static;
assigning ID to an imaging angle of view, assigning the same angle of view ID to the imaging angle even after all the moving subject become static, and controlling the priority of the imaging operation of the imaging angle of view including the same moving subject; and
allowing the zoom camera to take an image of a tracking target in the imaging area of the sensor camera while performing wide-angle imaging with the sensor camera.
